# EUROPEAN PATENT APPLICATION

(11) **EP 1 612 916 A1**
(43) Date of publication of application: **04.01.2006**
(21) Application number: 05253727.1
(22) Date of filing: 16.06.2005
(51) Int. Cl.: H02K 9/12, F25B 1/00, F25B 1/10

(54) **Pressurized air-cooled rotating electrical machine and method of operating the same**

(30) Priority: 28.06.2004 US 878691
(71) Applicant: GENERAL ELECTRIC COMPANY, Schenectady, NY 12345 (US)
(72) Inventor: Moeleker, Petrus Joannes Joseph, Latham, New York 12110 (US); De Bock, Hendrik Pieter Jacobus, Clifton Park, New York 12065 (US); Yagielski, John Russell, Scotia, New York (US)
(74) Representative: Pedder, James Cuthbert

(57) **Abstract**

A pressurized air-cooled rotating electrical machine (10) comprising a housing (18), and a rotor (12) and stator (14) disposed within the housing (18) driven by a shaft (16) is provided. The pressurized air-cooled rotating electrical machine (10) also comprises a compressor (28) operable to pressurize air within the housing (18) to increase the volumetric heat capacity of the air within the housing (18). The rotating electrical machine (10) may also have a temperature feedback device (36) disposed within the housing (18) to provide a signal representative of temperature within the housing (18). The pressurized air-cooled rotating electrical machine (10) may also comprise a pressure sensor (38) operable to detect air pressure within the housing (18). A controller (32) may be coupled to the temperature feedback device (36) and the compressor (28) to regulate the air pressure inside the rotating electrical machine (10) based on the temperature within the rotating electrical machine (10).

## Description

The invention relates generally to the field of rotating electrical machines, and more specifically to air-cooled rotating electrical machines.

Rotating electrical machines, such as generators and motors, either use or produce electricity. The electricity produces heat that must be removed or the machine may be damaged. Various techniques have been developed to remove heat from rotating electrical machines. For example, a generator generates electricity by converting mechanical energy into electrical energy. Generators generally comprise a stator and a rotor rotationally positioned within the stator. Typically, electricity is provided to the rotor to produce a magnetic field. A prime mover is used to rotate the rotor so that a rotating magnetic field is produced within the stator. The rotating magnetic field produced by the rotor induces a voltage within the stator that is coupled to an electric grid to enable the generator supply power. The electricity flowing through the rotor and stator produces heat. Fan blades are disposed on the rotor to create a flow of air through the generator as the rotor rotates. The flow of air removes heat from the rotor and stator by convection. However, the energy added to the flow of air by the fan blades increases the amount of work that is expended in rotating the rotor, thereby reducing the efficiency of the generator. Fan blades may also be provided on a rotor of a motor to produce a flow of air to cool the rotor and stator.

The larger the rotating electrical machine, the greater the mass of air that is needed to remove the heat produced inside the device. As a result, additional components, such as additional fans or proportionally larger fan blades, may be used to increase the airflow. These also tend to increase flow losses and reduce the efficiency of the generator. Some large generators use hydrogen gas, rather than air, to remove the heat generated inside the generator. The hydrogen gas has a higher volumetric heat capacity than air, which enables the generator to be cooled in a more efficient manner. However, the use of hydrogen increases the complexity of the generator.

Accordingly, there is a need for an air-cooled rotating electrical machine that provides a desired power output and efficiency.

Briefly, in accordance with one aspect of the present invention, a pressurized air-cooled rotating electrical machine is provided. The air-cooled rotating electrical machine comprises a housing, and a rotor and stator disposed within the housing. The pressurized air-cooled rotating electrical machine also comprises a compressor operable to pressurize air within the housing to increase the mass flow rate of the air flowing through the housing. The rotating electrical machine may also have a temperature feedback device disposed within the housing to provide a signal representative of temperature within the housing. A controller may be coupled to the temperature feedback device and the compressor to regulate the air pressure inside the rotating electrical machine based on the temperature within the rotating electrical machine.

In accordance with another aspect of the present invention, a method of operating an air-cooled rotating electrical machine is provided. The method comprises detecting a temperature inside the air-cooled rotating electrical machine and operating a compressor to raise air pressure within the air-cooled rotating electrical machine. The method may also comprise regulating the air pressure inside the air-cooled rotating electrical machine based upon the temperature inside the air-cooled rotating electrical machine.

The invention will now be described in greater detail, by way of example, with reference to the drawings, in which:-
FIG. 1 is a diagrammatic illustration of an exemplary pressurized air-cooled generator in accordance with aspects of the present technique;
FIG. 2 is a flow a chart illustrating a method of controlling a temperature of the air-cooled generator using the system of FIG. 1 in accordance with aspects of the present technique;
FIG. 3 is a flow chart illustrating a method of achieving a desired power output from the air-cooled generator of FIG. 1 in accordance with aspects of the present technique; and
FIG. 4 is an exemplary table illustrating typical power output and pressure of the air for the pressurized air-cooled generator of FIG. 1 in accordance with aspects of the present technique.

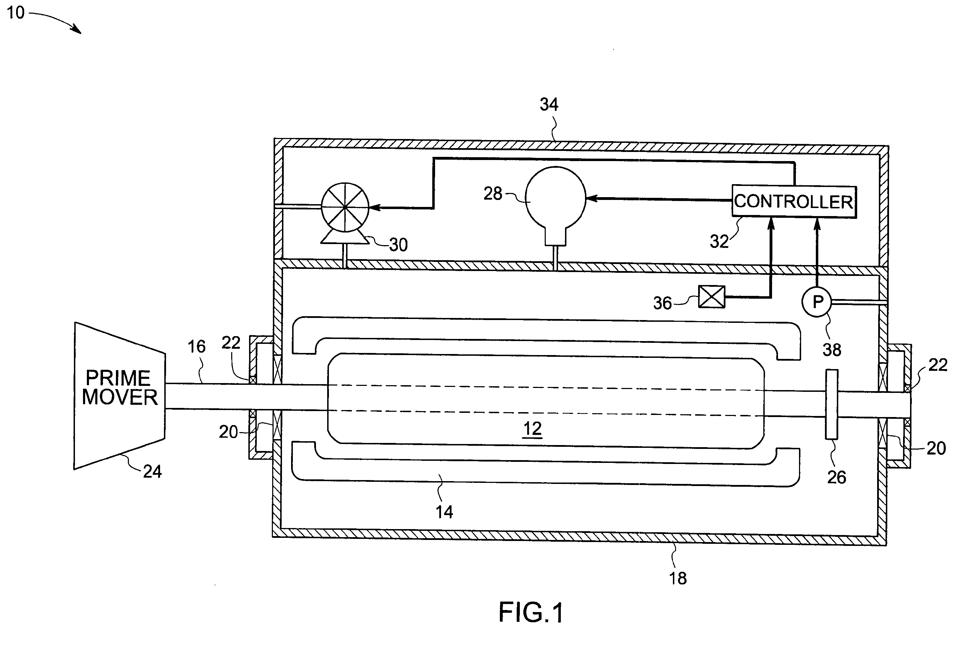

Referring now to FIG. 1, a pressurized air-cooled generator represented generally by reference numeral 10 is illustrated. However, the techniques described below are applicable to other rotating electrical machines, such as motors. The pressurized air-cooled generator 10 comprises a rotor 12 and a stator 14 surrounding the rotor 12. The rotor 12 is rotated by a rotatable shaft 16. The rotor 12, stator 14 and the shaft 16 are housed within a sealed housing 18. Further, the pressurized air-cooled generator 10 comprises bearings 20 and seals 22 for sealing the pressurized air-cooled generator 10 from the atmosphere. In addition, the shaft 16 is coupled to a prime mover 24 that is operable to rotate the shaft 16 and the rotor 12. The prime mover 24 may be a gas turbine, a steam turbine, a diesel engine, or some other form of heat engine. The pressurized air-cooled generator 10 comprises a fan 26 that is disposed on the shaft 16. The fan 26 produces a flow of air to cool the pressurized air-cooled generator 10 as the shaft 16 rotates.

The air-cooled generator also comprises a compressor 28 that is operable to pressurize the air within the housing 18. By pressurizing the air within the housing 18, the volumetric heat capacity of the air is increased. This enables the air to remove a greater amount of heat. In the illustrated embodiment, the fan 26 disposed on the shaft 16 is smaller than a fan in a non-pressurized generator having the same power rating because of the greater volumetric heat capacity of the pressurized air inside the pressurized air cooled generator 10. Because the fan 26 is smaller, the fan 26 consumes less power than a fan in a comparably rated non-pressurized air-cooled generator. This improves the efficiency of the generator 10 over that of comparably rated non-pressurized air-cooled generators.

The compressor 28 may be located inside the housing 18 or outside the housing 18. Alternatively, pressurized air from an external source, such as a bank of gas cylinders, may be used to pressurize the air within the air-cooled generator 10. Furthermore, for reasons to be described later, the pressurized air-cooled generator 10 may also have an air pump 30 that is operable to pump air from inside the housing 18 to lower the air pressure within the housing 18 below atmospheric air pressure.

In the illustrated embodiment, a controller 32 is coupled to the pressurized air-cooled generator 10 and to the compressor 28 to control the air pressure inside the housing 18 of the air-cooled generator 10. The compressor 28, the pump 30, and the controller 32 may be disposed within a separate housing 34 isolated from the housing 18. In a presently contemplated configuration, the controller 32 is coupled to a temperature feedback device 36 that is operable to measure the air temperature within the pressurized air-cooled generator 10 and transmit a signal representative of the air temperature to the controller 32. Moreover, a pressure transducer 38 may be disposed within the housing 18 to detect the air pressure within the housing 18 and to transmit a signal representative of the air pressure to the controller 32. In operation, the controller 32 receives the signal corresponding to the air temperature within the housing 18 of the pressurized air-cooled generator 10.

In the illustrated embodiment, the controller 32 controls the air pressure within the housing 18 to prevent the air temperature within the housing 18 from exceeding a desired temperature. By controlling the pressure of the air with the compressor 28, the mass flow rate of the air is controlled. Alternatively, the air pressure within the housing 18 may be increased above atmospheric pressure to increase the amount of cooling provided by the fan 26, and thereby enabling the generator 10 to output a greater amount of power or enabling a smaller generator to produce the same amount of power as a larger generator.

Furthermore, because the pressurized air-cooled generator 10 is housed in a sealed pressurized environment, the operation of the pressurized air-cooled generator 10 is less dependent of altitude. Moreover, sealing the pressurized air-cooled generator 10 reduces noise that is generated by the pressurized air-cooled generator 10.

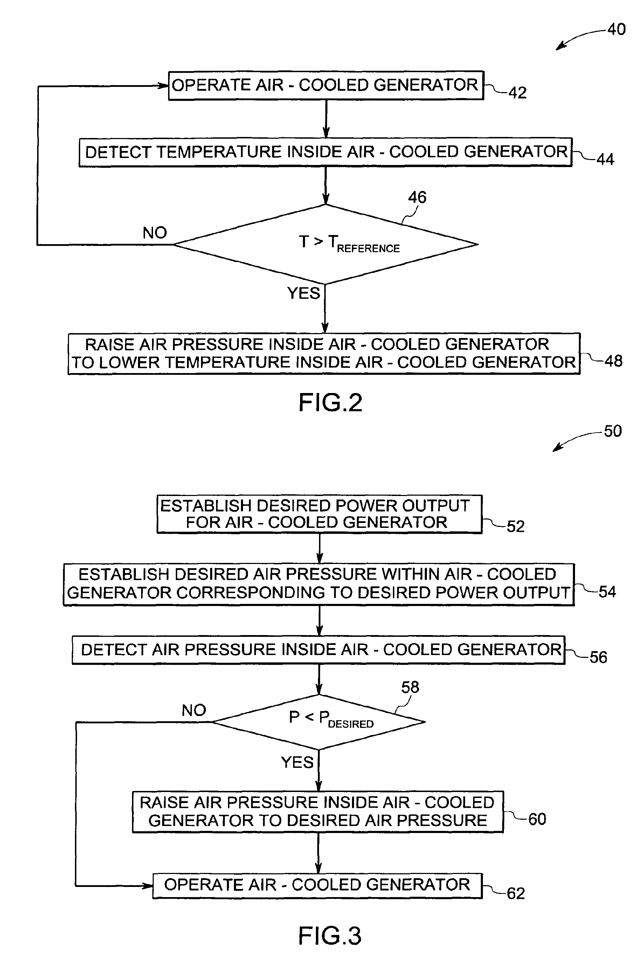

Referring generally to FIGS. 1 and 2, a method of controlling the temperature of the pressurized air-cooled generator using the system of FIG. 1 is illustrated in FIG. 2, and represented generally by a reference numeral 40. In the illustrated method, the pressurized air-cooled generator 10 is operated to follow the output power of the prime mover 24, as represented by block 42. The method of controlling the temperature of the pressurized air-cooled generator 10 comprises detecting the temperature inside the pressurized air-cooled generator 10 via the temperature feedback device 36, as represented by block 44. The temperature feedback device 36 may comprise a plurality of temperature sensors to detect the temperature at various locations within the housing 18 of the pressurized air-cooled generator 10. In one embodiment, an average temperature within the housing 18 may be computed based on the temperature detected at various locations within the housing 18 via the temperature feedback device 36. Subsequently, the computed average temperature may be used for controlling the temperature of the pressurized air-cooled generator 10.

As represented by block 46, the measured air temperature is then compared with a reference temperature by the controller 32. If the measured value of temperature is greater than the reference temperature, the air pressure inside the pressurized air-cooled generator 10 is raised via the compressor 28, as represented by block 48. Alternatively, if the measured value of temperature is lower than the reference temperature, the air pressure inside the pressurized air-cooled generator may 10 may be lowered to enhance the efficiency of the air-cooled generator 10. As described above, the volumetric heat capacity of the air is increased by increasing the air pressure. This enables the air flowing through the generator 10 to remove a greater amount of heat. The compressor 28 may be stopped when the temperature falls below the reference temperature. If the measured value of the temperature is lower than the reference temperature, the process 40 proceeds to block 42, where the pressurized air-cooled generator 10 is operated with the initial operating air pressure within the housing 18 or, if desired, the air pressure may be reduced below the initial operating air pressure to enhance the efficiency of the air-cooled generator 10.

As can be seen above, the temperature controlled design of the pressurized air-cooled generator 10 enables the power density of the pressurized air-cooled generator 10 to be controlled based on the temperature within the pressurized air-cooled generator 10. Referring generally to FIGS. 1 and 3, a method of controlling the output power of the pressurized air-cooled generator 10 of FIG. 1 is illustrated in FIG. 3, and represented generally by a reference numeral 50. By controlling the air pressure within the housing 18 of the pressurized air-cooled generator 10, the maximum output power of the pressurized air-cooled generator 10 may be regulated.

At block 52, a desired power output for the pressurized air-cooled generator 10 is established. The desired power output may be established based upon the requirements of a user of the pressurized air-cooled generator 10 and the power output of the prime mover 24. Typically, the power output requirement may depend upon various factors. For example, the demand for power may vary over the course of a day. Thus, when demand is high, a greater output from the generator 10 may be desired. The present technique enables the generator 10 to provide additional power for meeting the needs of the user.

At block 54, the air pressure corresponding to the desired power output of the pressurized air-cooled generator 10 is established. Next, the air pressure within the housing 18 of the pressurized air-cooled generator is detected through the pressure transducer 38, as represented by block 56. The measured air pressure is then transmitted to the controller 32. The measured air pressure within the air-cooled generator 10 is compared with the desired air pressure, as represented by block 58. If the measured air pressure is less than the desired air pressure, the air pressure inside the pressurized air-cooled generator 10 is raised to the desired air pressure using the compressor 28, as represented by block 60. Further, the pressurized air-cooled generator 10 is operated at the desired air pressure to achieve the desired power output, as represented by block 62. If the measured air pressure is greater than the desired pressure then the pressurized air-cooled generator 10 is operated at the measured air pressure, or reduced to the desired air pressure, as represented by block 62.

The technique also enables the air-cooled generator 10 to operate with higher terminal voltages. The terminal voltages are limited to prevent corona discharge within the generator. Corona occurs when the terminal voltage exceeds an electrical breakdown voltage. By increasing the air pressure within the air-cooled generator 10, the electrical breakdown voltage is increased.

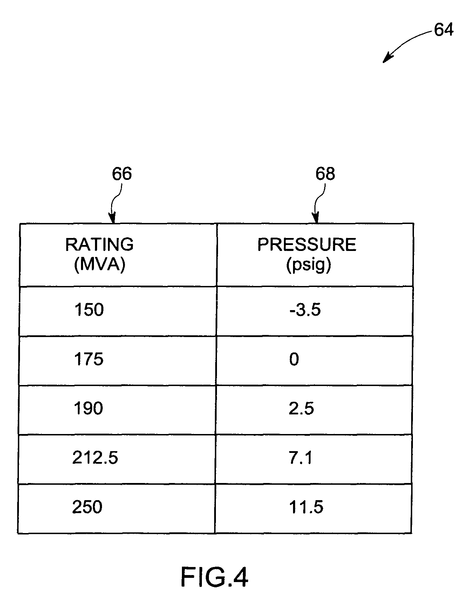

As described above with reference to FIGS. 1 and 3 the power output of a pressurized air-cooled generator 10 may be controlled by regulating the air pressure within the pressurized air-cooled generator 10 with the compressor 28. FIG. 4 illustrates an exemplary table 64 with a typical power rating 66 and corresponding pressure 68 of the air for the pressurized air-cooled generator 10 of FIG. 1. As the pressure 68 of the air within the pressurized air-cooled generator 10 is increased the corresponding output power 66 from the pressurized air-cooled generator 10 increases. Thus, a single air-cooled generator may be used to serve as a base model for a product line of air-cooled generators of differing output power ratings. In one embodiment, the pump 30 may be employed to depressurize the air-cooled generator 10 to lower the output power below the output power of the base model

In addition, an existing air-cooled generator can be upgraded to increase the output power of the generator. The technique requires coupling of a compressor to an existing air-cooled generator and sealing the air-cooled generator via a seal. The air pressure within the air-cooled generator is regulated via the compressor to achieve a desired power output. Further, an existing fan may be replaced by a smaller fan to enable the air-cooled generator to be more efficient. A kit may be employed for upgrading an existing air-cooled generator with an existing fan. The kit may comprise a compressor, a second fan that is smaller than the existing fan and a seal operable to seal the air-cooled generator from the atmosphere. Further, the technique of controlling the output power of the air-cooled generator by regulating the air pressure to enable a single base-generator to be used to create a family of air-cooled generators, each generator in the family producing different maximum output power. In this embodiment, each air-cooled generator in the family may have an air compressor to raise pressure within the generator to a different desired pressure to enable the generator produce a different desired maximum output. In addition, the generator may have an air pump for lowering air pressure within the air-cooled generator below atmospheric pressure.

The various aspects of the method described hereinabove have utility in generators used for different applications. For example, the technique may be used for offshore power generation where the generator may be designed at a base load and the requirement for higher peak loads may be achieved via regulating the air pressure inside the generator. As noted above, the method described here may be advantageous for achieving high power output of the generator by regulating the pressure of air inside the generator while reducing size and weight of such generator. The reduction in size and weight of the generator may be useful in certain other applications such as, in mobile generators, generators on top of wind turbines and so forth.

## Claims

1. A pressurized air-cooled rotating electrical machine (10) comprising:
a housing (18);
a stator (14) disposed within the housing (18);
a rotor (12) disposed within the stator (14);
a compressor (28) operable to raise air pressure within the housing (18);
a temperature feedback device (36) disposed within the housing (18), wherein the temperature feedback device (36) is operable to provide a signal representative of temperature within the rotating electrical machine (10); and
a controller (32) coupled to the temperature feedback device (36) and the compressor (28), wherein the controller (32) is operable to regulate the air pressure within the housing (18) based on the temperature within the rotating electrical machine (10).

2. The system as recited in claim 1, wherein the controller (32) controls the air pressure within the housing (18) to prevent the temperature within the housing (18) from exceeding a defined temperature.

3. The system as recited in claim 1, wherein the controller (32) increases the air pressure within the housing (18) when the temperature within the housing (18) increases above a defined temperature.

4. The system of claim 1, further comprising a shaft (16) coupled to the rotor (12) and disposed through the housing (18), and a seal (22) adapted to seal the housing (18) around the shaft (16).

5. The system of claim 4, further comprising a fan (26) coupled to the shaft (16) and operable to provide a flow of air through the rotating electrical machine (10) as the shaft (16) rotates.

6. The system of claim 1, wherein the controller (32) is operable to establish a desired air pressure within the housing (18) based upon the signal from the temperature feedback device (36) and to transmit a control signal to the compressor (28) to direct the compressor (28) to maintain the air pressure inside the rotating electrical machine (10) at the desired air pressure.

7. The system of claim 1, wherein the rotating electrical machine (10) is a generator.

8. A method of operating an air-cooled rotating electrical machine (10), comprising;
detecting a temperature inside the air-cooled rotating elctecrical machine (10);
operating a compressor (28) to raise air pressure within the air-cooled rotating electrical machine (10); and
regulating the air pressure inside the air-cooled rotating electrical machine (10) based upon the temperature inside the air-cooled rotating electrical machine (10).

9. A method of upgrading an air-cooled rotating electrical machine (10), comprising:
coupling an air compressor (28) to the air-cooled rotating electrical machine (10) to enable the compressor (28) to pressurize the interior of the air-cooled rotating electrical machine (10); and
sealing the rotating electrical machine (10) to prevent air from escaping from the interior of the air-cooled rotating electrical machine (10).

10. A method of improving efficiency of an air-cooled generator (10), comprising:
detecting temperature within the air-cooled generator (10);
operating an air compressor (28) to increase air pressure within the air-cooled generator (10) above atmospheric pressure to maintain temperature within the air-cooled generator (10) below a first defined temperature; and
operating an air pump (30) to lower air pressure within the air-cooled generator (10) below atmospheric pressure to maintain temperature within the air-cooled generator (10) above a second defined temperature.
